# EUROPEAN PATENT APPLICATION

(11) **EP 2 555 164 A1**
(43) Date of publication of application: **06.02.2013**
(21) Application number: 12167915.3
(22) Date of filing: 14.05.2012
(51) Int. Cl.: G06T 11/00

(54) **Display apparatus and control method thereof**

(30) Priority: 01.08.2011 KR 20110076431
(71) Applicant: Samsung Electronics Co., Ltd., Suwon-si, Gyeonggi-do, 443-742 (KR)
(72) Inventor: Chang, In-sik, Gyeonggi-do (KR)
(74) Representative: Clark, David James

(57) **Abstract**

A display apparatus and control method are provided. The display apparatus includes an image receiver which receives an image of a portion of a user's body; an image processor which processes the received image to be displayed; a display which displays the image processed by the image processor; and a controller which extracts a contour of the portion of the user's body from the image, generates a shadow image that distinguishes an internal region of the contour from an external region of the contour, and displays the generated shadow image on the display.

## Description

### BACKGROUND

### 1. Field

Apparatuses and methods consistent with the exemplary embodiments relate to a display apparatus and a control method thereof, and more particularly, to a display apparatus which analyzes an image and extracts and displays its contour, and a control method thereof.

### 2. Description of the Related Art

Shadow play refers to a situation in which a light is shined on a screen such as a wall and a person places their hands into the light causing a shadow of the hands to appear on the wall. For example, the person may configure their hands such that a shadow is displayed that represents an object, or an animal such as a dog or owl or the like, or an object. The shadow play requires a light source which emits the light and a screen such as a wall.

As visual media, related art display apparatuses such as televisions and so on have had unilateral information delivery capability, which might have resulted in undeveloped creativity in terms of early childhood education and physical underdevelopment of children due to long term watching. However, in addition to simple image delivery, recent display apparatuses provide a variety of contents related to gaming, shopping and so on and allow users to use a variety of functions such as Internet function, edition of received images and so on.

### SUMMARY

Accordingly, it is an aspect of one or more exemplary embodiments to provide a display apparatus which is capable of analyzing a picked image, extracting its contour and displaying the extracted contour as a shadow image, and a control method thereof.

It is another aspect of one or more exemplary embodiments to provide a display apparatus which is capable of analyzing an image received from an external source, extracting its contour and displaying the extracted contour as a shadow image, without a separate sensor or image pickup device, and a control method thereof.

According to an aspect of one or more exemplary embodiments, there is provided a display apparatus including an image receiving unit which receives an image of a portion of a user's body; an image processing unit which processes the received image to be displayed; a display unit which displays the image processed by the image processing unit; and a control unit which extracts a contour of the portion of the user's body from the image, generates a shadow image that distinguishes an internal region of the contour from an external region of the contour, and displays the generated shadow image on the display unit.

The control unit may generate the shadow image such that the internal region has a first brightness and the external region has a second brightness being different from the first brightness, to distinguish the internal region from the external region.

The control unit may generate the shadow image such that the internal region has a first color and the external region has a second color being different from the first color, to distinguish the internal region from the external region.

The control unit may display the shadow image and a guide image on the display unit.

The control unit may reproduce image contents including the guide image and display the reproduced image contents on the display unit.

The control unit may determine whether the shadow image matches with the guide image by more than a threshold percentage, and if the shadow image is determined to match the guide image by more than the threshold percentage, display an additional image added to the shadow image, along with the guide image, on the display unit.

The control unit may determine whether the shadow image matches with the guide image by more than a threshold percentage, and if the shadow image is determined to match the guide image by more than the threshold percentage, display a real image corresponding to the guide image on the display unit.

The control unit may determine whether the shadow image matches with the guide image by more than a threshold percentage, and if the shadow image is determined to match the guide image by more than the threshold percentage, display a guide image different from the guide image on the display unit.

The control unit may compare a size of the shadow image with a size of the guide image and changes the size of the shadow image.

The display apparatus may further include a voice output unit which outputs voice, and the control unit may determine whether the shadow image matches with the guide image by more than a threshold percentage, and if the shadow image is determined to match the guide image by more than the threshold percentage, control at least one of the corresponding voice and the image to be output by the voice output unit and the display unit, respectively.

The display apparatus may further include a storage unit which stores at least one of the guide image and the image contents including the guide image.

The control unit may search color information on each pixel included in the image, determine whether the searched color information corresponds to a preset color, and extract the contour of the portion of the user's body based on the determination.

The display apparatus may further include an image pickup unit which picks up the image of the portion of the user's body and transmits the picked up image to the image receiving unit.

The first brightness may be lower than the second brightness.

According to another aspect of one or more exemplary embodiments, there is provided a control method of a display apparatus, the control method including receiving an image of a portion of a user's body; processing and displaying the received image; extracting a contour of the portion of the user's body from the image; and generating and displaying a shadow image that distinguishes an internal region of the contour from an external region of the contour.

The internal region may have first brightness and the external region may have a second brightness being different from the first brightness to distinguish the internal region from the external region.

The internal region may have first color and the external region may have a second color being different from the first color to distinguish the internal region from the external region.

The control method may further include displaying the shadow image and a guide image.

The control method may further include reproducing and displaying image contents including the guide image.

The control method may further include determining whether the shadow image matches with the guide image by more than a threshold percentage.

If the shadow image is determined to match the guide image by more than the threshold percentage, the control method may further include displaying an additional image added to the shadow image, along with the guide image.

If the shadow image is determined to match the guide image by more than the threshold percentage, the control method may further include displaying a preset real image corresponding to the guide image.

If the shadow image is determined to match the guide image by more than the threshold percentage, the control method may further include displaying a guide image different from the guide image.

The control method may further include comparing a size of the shadow image with a size of the guide image; and changing the size of the shadow image based on the comparison.

The extracting a contour may include searching color information on each pixel included in the image; determining whether the searched color information of each pixel corresponds to a preset color; and extracting the contour of the portion of the user's body based on the determination.

The first brightness may be lower than the second brightness.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a control block diagram showing a display apparatus according to an exemplary embodiment;
FIG. 2 is a view showing a method of extracting a contour of a picked image according to an exemplary embodiment;
FIG. 3 is a view showing a screen on which a shadow image is displayed according to an exemplary embodiment;
FIGS. 4A and 4B are views showing a screen on which a shadow image and a guide image are displayed together according to an exemplary embodiment;
FIG. 5 is a view showing a screen on which a shadow image and contents including a guide image are displayed together according to an exemplary embodiment;
FIGS. 6A and 6B are views showing a screen on which a shadow image added with an additional image is displayed and a screen on which a guide image changed to a real image is displayed according to an exemplary embodiment;
FIG. 7 is a flow chart showing a first process of the display apparatus shown in FIG. 1;
FIG. 8 is a flow chart showing an example method of extracting a contour of an image according to an exemplary embodiment; and
FIGS. 9A and 9B are flow charts showing a second process of the display apparatus shown in FIG. 1.

### DETAILED DESCRIPTION

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout. In the following embodiments, explanation of components having no direct relation to the spirit of the present invention is omitted. However, it is appreciated that it is not meant to exclude such omitted components from a display system to which the spirit of the invention is applied.

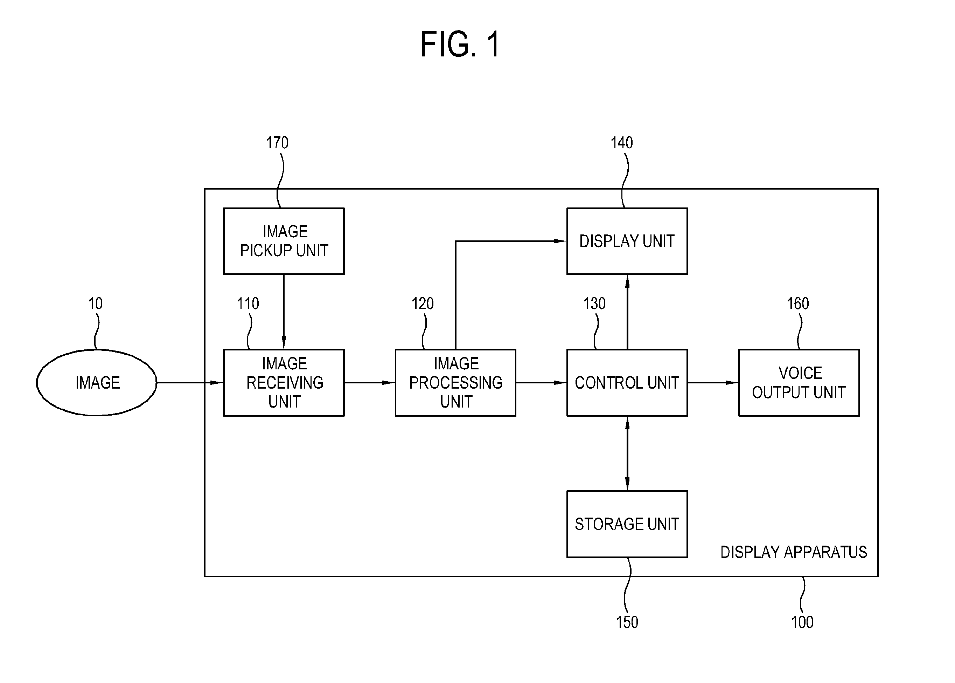

FIG. 1 is a control block diagram showing a display apparatus according to an exemplary embodiment.

Referring to FIG. 1, the display apparatus 100 includes an image receiving unit 110, an image processing unit 120, a control unit 130, a display unit 140, a storage unit 150, a voice output unit 160 and an image pickup unit 170. The display apparatus 100 may be implemented with an apparatus, such as a TV, a monitor and so on, capable of displaying an image received from an external source.

The image receiving unit 110 receives an image signal from the external source. The received image signal may be a signal received from a digital camera, a digital camcorder and other external image pickup devices and a received image may contain an image of a portion of a user's body.

The image processing unit 120 receives an image from the image receiving unit 110 and processes the received image to be displayed. The image process performed by the image processing unit 120 may include decoding, image enhancing, scaling and so on. If the received image is an analog image, it may be converted into a digital image.

The display unit 140 displays the image processed by the image processing unit 120 under control of the control unit 130. The image displayed on the display unit 140 may include a shadow image 40, a guide image 50, an additional image 60 and a real image 70, which will be described later.

The storage unit 150 stores at least one guide image 50 and at least one of image contents 52 including the guide image, which will be described later. The storage unit 150 may be implemented with a storage device including a nonvolatile memory, such as a hard disk drive (HDD), within the display apparatus 100 or alternatively may be implemented with an external storage device, such as a USB storage device or the like, provided on the outside of the display apparatus 100. The storage unit 150 may store a variety of information in addition to the image contents 52 related to the guide image. In this exemplary embodiment, the display apparatus 100 may use the guide image 50 or the image contents 52 including the guide image to perform shadow play by accessing an external server via Internet.

The voice output unit 160 outputs voice under control of the control unit 130. As will be described later, if the shadow image 40 matches with the guide image 50 by a predetermined percentage, in one exemplary embodiment when the control unit 130 transmits a voice output command to the voice output unit 160, the voice output unit 160 outputs a corresponding voice. The voice output unit 160 may be implemented with a speaker provided in the inside or outside of the display apparatus 100.

The image pickup unit 170 picks up an image of a portion of a user's body and transmits the picked image to the image receiving unit 110. In this exemplary embodiment, the display apparatus 100 may receive an image signal from an external image pickup device connected to the display apparatus 100 via a cable or by a wireless method and generate a shadow image 40, or alternatively, the image pickup unit 170 provided within the display apparatus 100 may directly pick up an image of a portion of a user's body. In the latter case, the image pickup unit 170 may be, for example, a camera provided within the display apparatus 100.

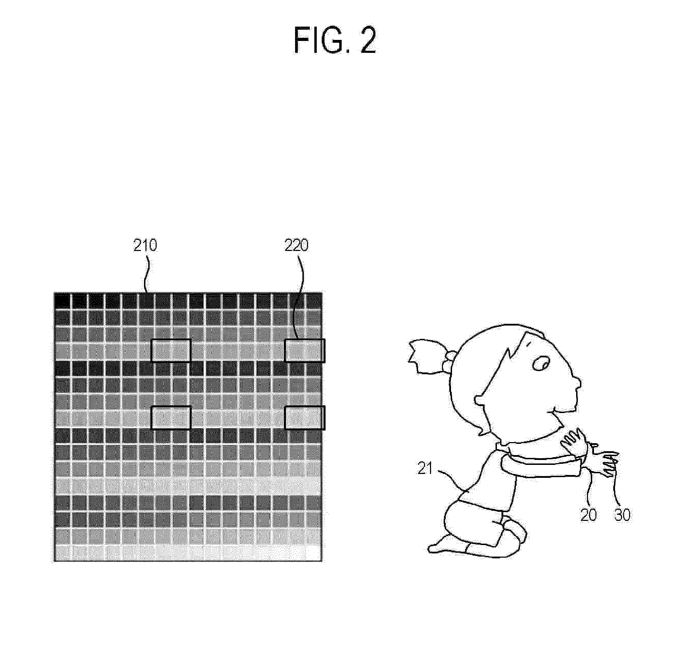

The control unit 130 controls the operation of the display apparatus 100. Although not shown, the control unit 130 may include control programs, a nonvolatile memory such as a read only memory (ROM), a flash memory or the like in which control programs are stored, a volatile memory such as a random access memory into which at least some of the stored control programs are loaded, and a microprocessor such as a central processing unit (CPU), a micro control unit or the like which executes the loaded control programs. Detailed control operation of the control unit 130 will be described with reference to FIGS. 2 to 6B.

FIG. 2 is a view showing a method of extracting a contour of a picked image according to an exemplary embodiment.

The control unit 130 extracts a contour 30 of a portion of a user's body (e.g., the hands) from an image 210 processed by the image processing unit 120. In this case, only a user's hand or hands that form a shadow are recognized to extract the contour.

The control unit 130 may search information on color of pixels included in the image 210 and determine whether or not the searched color information corresponds to a predetermined color 220 in order to extract the contour 30 of the portion 20 of the user's body. For example, if a displayed image has a 256 color resolution, each pixel may be displayed with one of colors included in a 256 color table. The control unit 130 may search whether or not each pixel of the image is one of 256 colors and determine a portion corresponding to the predetermined color 220 to be the potion 20 of the body. Referring to FIG. 2, the portion 20 of the pixel matching the predetermined color 220 in the image is distinguished from other portions 21 and a boundary therebetween may be designated as the contour 30. The predetermined color 220 may be composed of a plurality of colors similar to a color of a user's skin and the contour 30 may be extracted according to other known methods in addition to the above-described method.

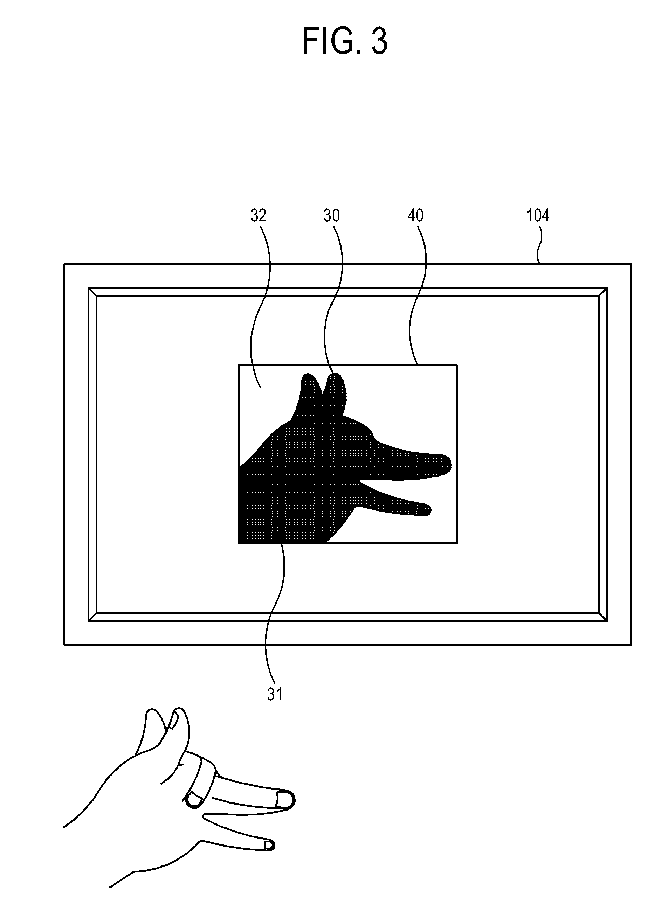

Thus, without a separate sensor or device, the display apparatus 100 can analyze an image received from an external source, extract its contour, and display the extracted contour as a shadow image 40 (see FIG. 3).

FIG. 3 is a view showing a screen on which a shadow image is displayed according to an exemplary embodiment.

Upon extracting a contour 30 of an image of a portion of a user's body, the control unit 130 generates the shadow image 40 by processing an internal region 31 and an external region 32 of the contour to be distinguished from each other. The shadow image 40 may be modified according to a change of an input image, that is, user's motion, or may be a still image obtained by capturing particular motion of the user.

The shadow image 40 may have a first brightness of the internal region 31 of the contour 30 and a second brightness of the external region 32, which is different from the first brightness. In this case, the first brightness may be lower than the second brightness such that the shadow image 40 is similar to a real shadow. For example, the first brightness and the second brightness may be black and white, respectively. In addition, the shadow image 40 may have a first color of the internal region 31 of the contour 30 and a second color of the external region 32 of the contour 30, which is different from the first color, in which case the first color may be darker than the second color.

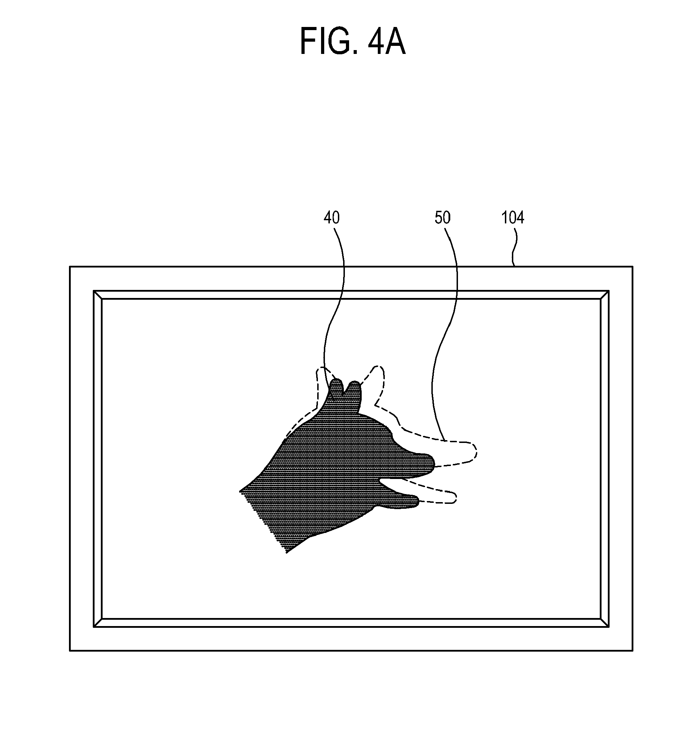

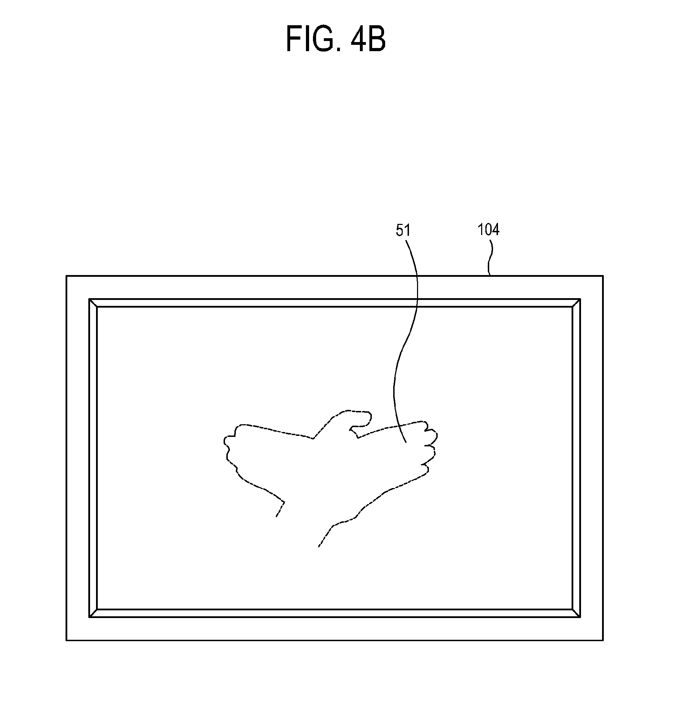

The control unit 130 may compare a size of the shadow image 40 with a size of a guide image 50 (which will be described later; see FIGS. 4A and 4B) and change the size of the shadow image 40 such that the shadow image 40 matches with the guide image 50 by more than a predetermined percentage.

The control unit 130 controls the shadow image 40 generated by the above-described method to be displayed on the display unit 140. As a result, the user can use the display apparatus 100 to obtain an actual effect of shadow play.

FIGS. 4A and 4B are views showing a screen on which the shadow image 40 and a guide image 50 are displayed together according to an exemplary embodiment.

The control unit 130 may display the shadow image 40 and at least one guide image 50 on the display unit 140. The guide image 50 serves as a guide to help the user to express various shapes of animals or objects using hand actions. The guide image 50 may be composed of dotted lines or may be expressed by colors different from the shadow image 40 to distinguish the guide image 50 from the shadow image 40.

The control unit 130 may determine whether or not the shadow image 40 matches with the guide image 50 by more than a threshold percentage. Referring to FIG. 4A, the guide image 50 composed of dotted lines is displayed on the display unit 140. The shadow image 40 of the user's hands is changed by the user until the shadow image 40 overlaps with the guide image 50. In this case, the user tries to match the shadow image 40 with the guide image 50 while moving a portion of his/her body, e.g., his/her hands.

The control unit 130 may calculate an area of the displayed guide image 50 and an area of the displayed shadow image 40 in the unit of pixels and determine a match percentage through a ratio of the number of pixels of the overlapping portion of the guide image 50 and the shadow image 40 to the number of pixels of the displayed guide image 50. In this case, the threshold percentage may be 80% to 90%.

If the shadow image 40 matches with the guide image 50 by more than the threshold percentage, the control unit 130 may display a guide image 51 different from the displayed guide image 50 on the display unit 140. As shown in FIG. 4B, the newly displayed guide image 51 may be an expression of an animal or an object different from the previously displayed guide image, in which case the user may again change the shadow image 40 by moving a portion of his/her body in order to try to match the newly displayed guide image 51.

If the shadow image 40 matches with the guide image 50 by more than the threshold percentage, the control unit 130 may control at least one of the voice output unit 160 and the display unit 140 to output a voice or image, respectively, or both together. In this case, voice, for example "match" or "fine", is output through the voice output unit 160, or an image including "match" or "fine" may be displayed on the display unit 140. Of course, the output is not limited to this, and any word, phrase, or image is contemplated. Informing the user of the match of the shadow image 40 with the guide image 50 may arouse the user's will and increase his/her concentration on the shadow play.

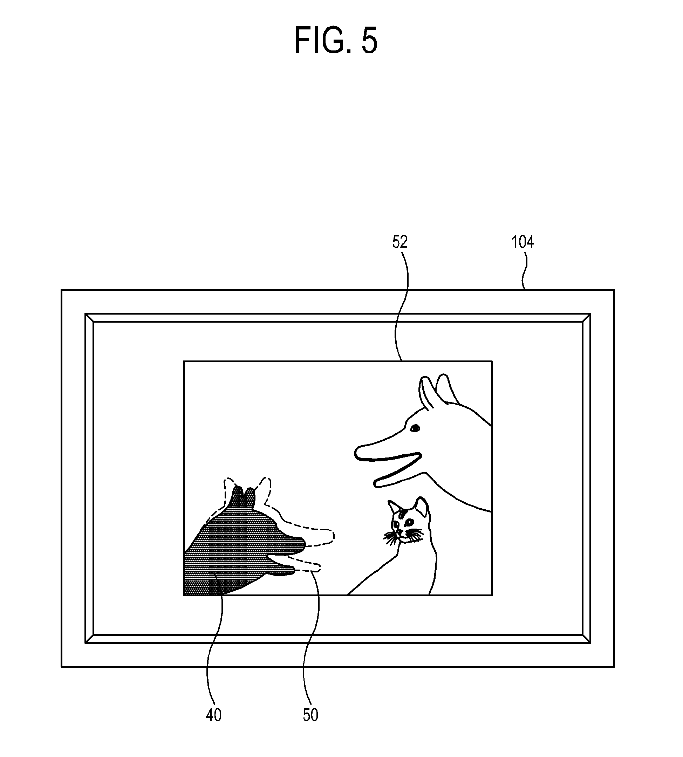

FIG. 5 is a view showing a screen on which the shadow image 40 and the contents 52 including the guide image are displayed together according to an exemplary embodiment.

In this exemplary embodiment, the control unit 130 may reproduce the image contents 52 including at least one guide image 50 to be displayed on the display unit 140. The image contents 52 may include several scenes such as picture books and the guide image 50 may be included in one of the scenes.

When the image contents 52 are reproduced and displayed, the scenes are displayed on the display unit 140 in turn and the guide image 50 is displayed in a portion of one of the scenes. In this case, the control unit 130 generates the shadow image 40 from the received image and determines whether or not the generated shadow image 40 matches with the guide image 50 by more than the threshold percentage, in which case a method of extracting the contour 30 of a portion of a user's body, a method of generating the shadow image 40 and a method of determining a degree of match of the shadow image 40 with the guide image 50 can be achieved as previously described.

If the shadow image 40 matches with the guide image 50 included in the image contents 52, the control unit 140 controls the image contents 52 to be switched to the next scene for display. When the guide image 50 is displayed in a portion of the next scene, the user can shadow play as before by changing the shadow image 40 by moving a portion of his/her body in order to try to match the guide image 50.

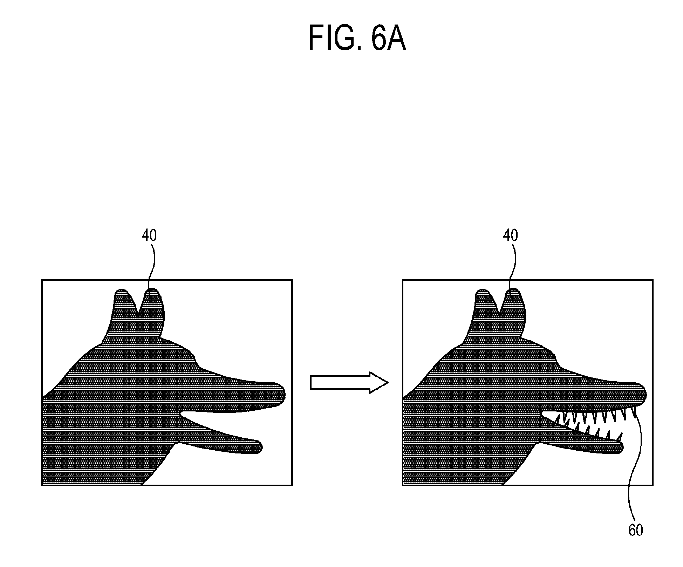

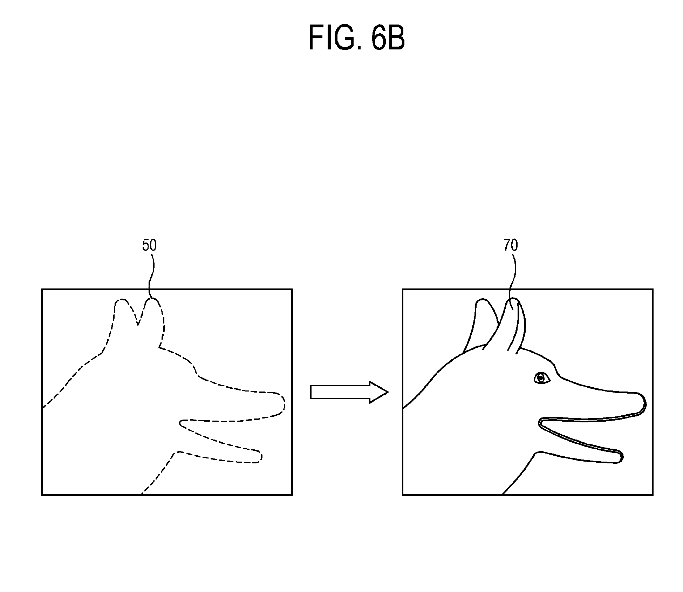

FIGS. 6A and 6B are views showing a screen on which the shadow image 130 added with an additional image 60 is displayed and a screen on which the guide image 50 changed to a real image 70 is displayed according to an exemplary embodiment.

In this exemplary embodiment, the control unit 130 may determine whether or not the shadow image 40 matches with the guide image 50 by more than a threshold percentage. If so, the control unit 130 may display the additional image 60 added to the shadow image 40 on the display unit 140. Referring to FIG. 6A, if the guide image 50 has a shape of dog, when the user expresses the shadow image 40 to match the guide image 50 of the shape of the dog, a shape of the teeth or the nose of the dog, which is hard to be expressed with a portion of the user's body, is added to the shadow image 40. Since the shadow image 40 expressed by the user with a shape of his/her hand is hard to match with a shape of a real animal or object in the minutest details, the addition of the additional image 60 to the shadow image 40 may increase interest. The additional image 60 may be preset in correspondence with the guide image 50.

In addition, when it is determined that the shadow image 40 matches with the guide image 50 by more than the threshold percentage, the control unit 130 may display the real image 70 corresponding to the shadow image 40 on the display unit 140. Referring to FIG. 6B, if the guide image 50 has a shape of dog, when the user expresses the shadow image 40 to match the guide image 50 of the shape of the dog, the user can remove the displayed guide image 50 and display the real image 70 expressed by a preset picture or photograph of a real dog, which is similar to the guide image 50, on the display unit 140. This also may result in increasing interest in the shadow play.

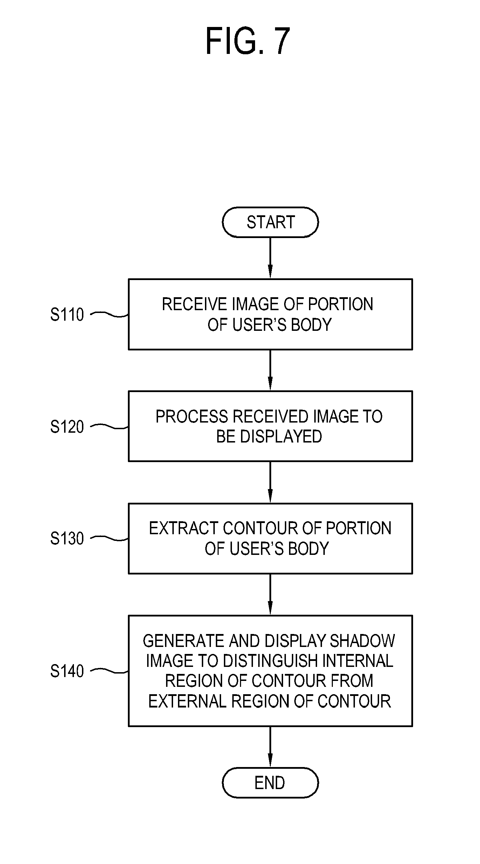

FIG. 7 is a flow chart showing a first process of the display apparatus 100 shown in FIG. 1.

The display apparatus 100 receives an image of a portion of a user's body (S110). In this case, the image pickup unit provided within the display apparatus 100 may directly pick up the image of the portion of the user's body.

The display apparatus 100 processes the received image to be displayed (S120). The image process may include decoding, image enhancing, scaling and so on. If the received image is an analog image, it may be converted into a digital image.

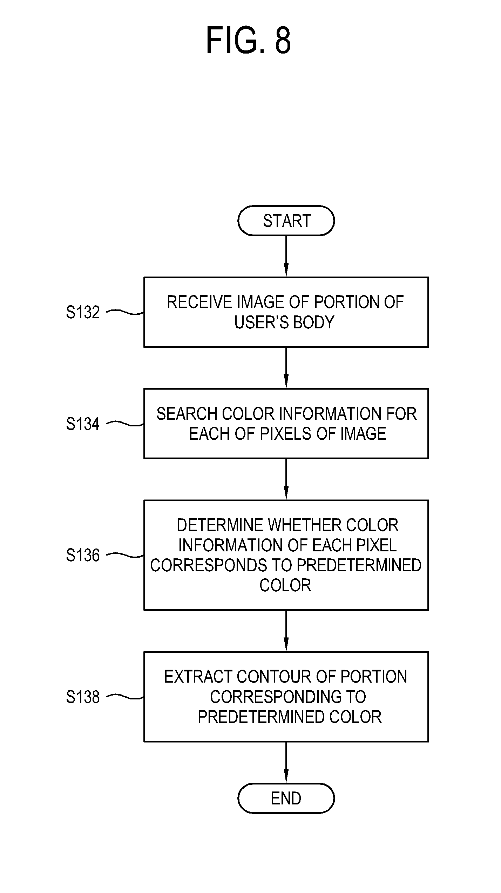

Next, a contour of the portion of the user's body is extracted from the received image (S130). A method of extracting the contour will be described later with reference to FIG. 8.

When the contour is extracted, the display apparatus 100 generates a shadow image by processing an internal region and an external region of the contour to be distinguished from each other (S140). In this case, the shadow image may have a first brightness of the internal region of the contour and a second brightness of the external region, which is different from the first brightness. In this case, the first brightness may be lower than the second brightness such that the shadow image is similar to a real shadow. For example, the first brightness and the second brightness may be black and white, respectively. In addition, the shadow image may have a first color of the internal region of the contour and a second color of the external region of the contour, which is different from the first color, in which case the first color may be darker than the second color.

FIG. 8 is a flow chart showing an example method of extracting a contour of an image according to an exemplary embodiment.

Upon receiving the image of the portion of the user's body (S132), the display apparatus 100 searches information on colors of pixels included in the image (S134). For example, if a displayed image has a 256 color resolution, each pixel may be displayed with one of 256 colors and the display apparatus 100 searches for color information for each of the pixels of the image.

Next, it is determined whether or not the color information of each pixel corresponds to a predetermined color (S136). The predetermined color may be composed of a plurality of colors similar to a color of a user's skin. Next, a contour of a portion of the image corresponding to the predetermined color is extracted (S138) and a shadow image is generated by distinguishing an internal region of the contour from an external region of the contour. The contour may be extracted according to other known methods in addition to the above-described method.

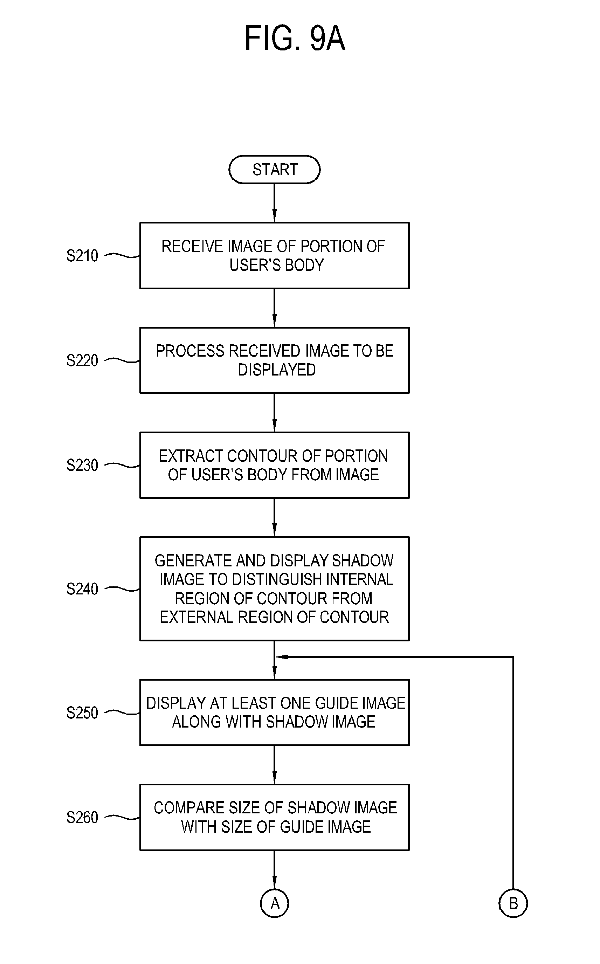

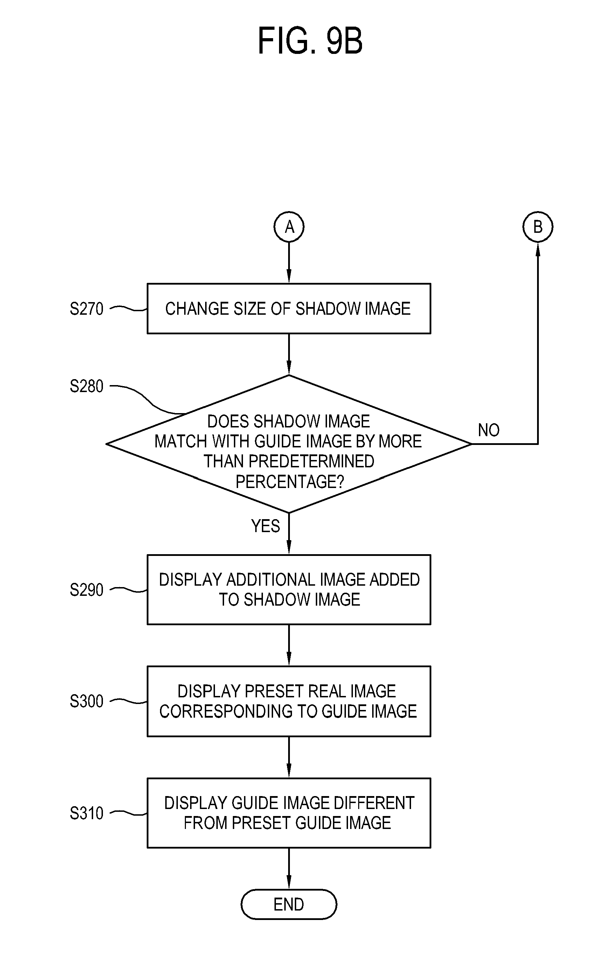

FIGS. 9A and 9B are flow charts showing a second process of the display apparatus 100 shown in FIG. 1.

The display apparatus 100 receives an image of a portion of a user's body (S210) and processes the received image to be displayed (S220). Next, a contour of the portion of the user's body is extracted from the received image (S230) and generates a shadow image by processing an internal region and an external region of the contour to be distinguished from each other (S240).

The display apparatus 100 may display the shadow image and at least one guide image (S250). The guide image guides the user to help the user to express various shapes of animals or objects using his/her hand action. The guide image may be composed of dotted lines or may be expressed by colors different from the shadow image to distinguish from the shadow image. In this case, the display apparatus 100 may reproduce and display image contents including at least one guide image.

In this case, a size of the shadow image may be compared with a size of the guide image (S260) and the size of the shadow image may be changed to match the shadow image with the guide image by more than a predetermined percentage (S270).

The display apparatus 100 may determine whether or not the shadow image matches with the guide image by more than the threshold percentage (S280). In this case, an area of the displayed guide image and an area of the displayed shadow image may be calculated in the unit of pixel and a match percentage may be determined through a ratio of the number of pixels of the overlapping portion of the guide image and the shadow image to the number of pixels of the displayed guide image. In this case, the threshold percentage may be 80% to 90%.

If the shadow image matches with the guide image by more than the threshold percentage, an additional image added to the shadow image may be displayed along with the shadow image (S290). For example, the additional image may correspond to a shape of a tooth or a nose of a dog, which is hard to be expressed with a shape of a hand. Such addition of the additional image to the shadow image may increase the user's interest. The additional image may be preset in correspondence to the guide image.

The display apparatus 100 may display a preset real image corresponding to the guide image (S300). If the guide image has a shape of dog, when the user expresses the shadow image corresponding to the guide image of the dog, the user can remove the displayed guide image and display the real image expressed by a preset picture or photograph of a real dog, which is similar to the guide image. This also may increase the user's interest in the shadow play. Although the Fig 9B illustrates that displaying the additional image(S290) and displaying the preset real image(S300), they are optional in the present invention. That is, if one or all of the displaying the additional image(S290) and the displaying the preset real image(S300) skipped, there is no limit to realize the present invention.

If the shadow image matches with the guide image by more than the threshold percentage, the display apparatus 100 may display a guide image different from the displayed guide image (S310). The newly displayed guide image may be an expression of an animal or an object different from the previously displayed guide image, in which case the user may perform a shadow play again by changing the shadow image by moving a portion of his/her body to try to match the newly displayed guide image.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
an image receiving unit which receives an image of a portion of a user's body;
an image processing unit which processes the received image to be displayed;
a display unit which displays the image processed by the image processing unit; and
a control unit which extracts a contour of the portion of the user's body from the image, generates a shadow image that distinguishes an internal region of the contour from an external region of the contour, and displays the generated shadow image on the display unit.

2. The display apparatus according to claim 1,
wherein the control unit generates the shadow image such that the internal region has a first brightness and the external region has a second brightness different than the first brightness to distinguish the internal region from the external region, and
wherein the first brightness is lower than the second brightness.

3. The display apparatus according to claim 1, wherein the control unit generates the shadow image such that the internal region has a first color and the external region has a second color different than the first color to distinguish the internal region from the external region.

4. The display apparatus according to claim 1, wherein the control unit displays the shadow image and a guide image on the display unit.

5. The display apparatus according to claim 4, wherein the control unit reproduces image contents including the guide image and displays the reproduced image contents on the display unit.

6. The display apparatus according to claim 4 or 5, wherein the control unit determines whether the shadow image matches with the guide image by more than a threshold percentage, and if the shadow image is determined to match the guide image by more than the threshold percentage, displays an additional image added to the shadow image, along with the guide image, on the display unit.

7. The display apparatus according to claim 4 or 5, wherein the control unit determines whether the shadow image matches with the guide image by more than a threshold percentage, and if the shadow image is determined to match the guide image by more than the threshold percentage, displays a preset real image, which corresponds to the guide image, on the display unit.

8. The display apparatus according to claim 4 or 5, wherein the control unit determines whether the shadow image matches with the guide image by more than a threshold percentage, and if the shadow image is determined to match the guide image by more than the threshold percentage, displays a next guide image different from the guide image on the display unit.

9. The display apparatus according to any of the claims 4 to 8, further comprising a voice output unit which outputs voice,
wherein the control unit determines whether the shadow image matches with the guide image by more than a threshold percentage, and if the shadow image is determined to match the guide image by more than the threshold percentage, controls at least one of the voice and the image to be output by the voice output unit and the display unit, respectively.

10. A control method of a display apparatus, the control method comprising:
receiving an image of a portion of a user's body;
processing and displaying the received image;
extracting a contour of the portion of the user's body from the image; and
generating and displaying a shadow image that distinguishes an internal region of the contour from an external region of the contour.

11. The control method according to claim 10, wherein the shadow image is generated such that the internal region has a first brightness and the external region has a second brightness different than the first brightness to distinguish the internal region from the external region and,
wherein the first brightness is lower than the second brightness.

12. The control method according to claim 10 or 11, further comprising displaying the shadow image and a guide image.

13. The control method according to claim 12, further comprising determining whether the shadow image matches with the guide image by more than a threshold percentage.

14. The control method according to claim 12, further comprising if it is determined that the shadow image matches the guide image by more than the threshold percentage, displaying an additional image added to the shadow image, along with the guide image.

15. The control method according to claim 12, further comprising if it is determined that the shadow image matches the guide image by more than the threshold percentage, displaying a preset real image corresponding to the preset guide image.
